(19) Europäisches Patentamt
European Patent Office
Office européen des brevets

(11) EP 3 270 241 A1

(12) **EUROPEAN PATENT APPLICATION**

(43) Date of publication:
17.01.2018 Bulletin 2018/03

(51) Int Cl.:
*G05B 13/04* (2006.01)  *G05B 17/02* (2006.01)
*F02C 9/00* (2006.01)  *F01K 13/02* (2006.01)

(21) Application number: 17180812.4

(22) Date of filing: 11.07.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.07.2016 US 201615206311**

(71) Applicant: **General Electric Company Schenectady, NY 12345 (US)**

(72) Inventors:
• **WHITRIGHT, Brian James**
**Greenville, South Carolina 29615-4614 (US)**
• **BLOCK, Frederick William**
**Greenville, South Carolina 29615-4614 (US)**

(74) Representative: **Fischer, Michael Maria et al**
**General Electric Technology GmbH**
**Global Patent Operation - Europe**
**Brown Boveri Strasse 7**
**5400 Baden (CH)**

(54) **MODEL-BASED CONTROL SYSTEM AND METHOD FOR TUNING POWER PRODUCTION EMISSIONS**

(57) A model-based control system (10) is configured to select a desired parameter (74) of a machinery (16) configured to produce power and to output emissions and to select an emissions model (34) configured to use the desired parameter (74) as input and to output an emissions parameter. The model-based control system is additionally configured to tune the emissions model (34) via a tuning system (36) to derive a polynomial setpoint, and to control one or more actuators (14) coupled to the machinery (16) based on the polynomial setpoint.

EP 3 270 241 A1

FIG. 1

**Description**

BACKGROUND OF THE INVENTION

The subject matter disclosed herein relates to power generation systems. In particular, the embodiments described herein relate to control systems for tuning emissions of power generation systems.

Many control systems for power generation systems may use a variety of models to predict the performance of the power generation system and control various aspects of the system based on the prediction. These models may be physics-based models that predict performance based on the relationships between the components of the power generation system, physics of the component materials, and the operating environment. Often, these models may be determined based on known physical relationships between parameters (e.g., a known relationship between pressure and volume) as well as relationships captured through both lab and on-site testing.

After the physics-based models are created, the models may be tuned to account for actual variations in field conditions and data during requisitioning, which typically occurs during commissioning of the power generation system. However, tuning models based on actual variations in field conditions and data is often a manual process which may be time- and labor-consuming. For instance, the actual variations may vary from site to site, increasing the amount of time and effort required to determine the variations in field conditions and data and tune the models in the control system at each site. Additionally the variations may themselves change over time due to the operation and/or degradation of components in the power generation system and the control system. Accordingly, it would be beneficial to improve model based control and modeling for emissions tuning.

BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a model-based control system is configured to select a desired parameter of a machinery configured to produce power and to output emissions and to select an emissions model configured to use the desired parameter as input and to output an emissions parameter. The model-based control system is additionally configured to tune the emissions model via a tuning system to derive a polynomial setpoint, and to control one or more actuators coupled to the machinery based on the polynomial setpoint.

In a second embodiment, a method includes selecting a desired parameter of a machinery configured to produce power and to output emissions and selecting an emissions model configured to use the desired parameter as input and to output an emissions parameter. The method further includes tuning the emissions model via a tuning system to derive a polynomial setpoint and controlling one or more actuators coupled to the machinery based on the polynomial setpoint.

In a third embodiment, a non-transitory, computer-readable medium includes executable code including instructions. The instructions are configured to select a desired parameter of a machinery configured to produce power and to output emissions and to select an emissions model configured to use the desired parameter as input and to output an emissions parameter. The model-based control system is additionally configured to tune the emissions model via a tuning system to derive a polynomial setpoint, and to control one or more actuators coupled to the machinery based on the polynomial setpoint.

BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:

FIG. 1 illustrates a block diagram of a model-based control system that may be used to control power production machinery, in accordance with an embodiment of the present approach;

FIG. 2 illustrates a block diagram of the components of the power production machinery and the model-based control system of FIG. 1, in accordance with an embodiment of the present approach;

FIG. 3 illustrates a flow chart for a process that the model-based control system of FIG. 1 may use to control the power production machinery and improve the models of the control system, in accordance with an embodiment of the present approach;

FIG. 4 illustrates a flow chart for a process that the process of FIG. 3 may use to improve the models of the control system, in accordance with an embodiment of the present approach;

FIG. 5 illustrates a block diagram depicting the information flow of the process of FIG. 4, in accordance with an embodiment of the present approach;

FIG. 6 illustrates an embodiment of a process to use model-based empirical tuning of emissions for the power production machinery of FIG. 1; and

FIG. 7 illustrates temperature versus megawatt operating diagram that may be applied to operate the power production machinery after the tuning process of FIG. 8.

DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Present embodiments generally relate to emissions tuning and model-based control of power production machinery, such as gas turbines, steam turbines, wind turbines, and/or hydro turbines. In particular, the embodiments described herein relate to using models to monitor and tune emissions while additionally or alternatively controlling the operation of the power production machinery and simultaneously improving the models to account for actual field conditions and data. For example, in one embodiment, the models may be used to sense operations and/or emissions (e.g., particulates, nitrous oxides [NOx]) of a turbomachinery and to tune emissions and/or operations of the turbomachinery based on the sensed data. Additionally, the techniques described herein provide for using surrogacy, where a surrogate measurement having a first measurement type or parameter having a first measurement type is used as a stand-in for a different measurement having a second measurement type or parameter having a second measurement type, the first measurement type different form the second measurement type. Some example surrogate measurements include various power measurements, measured inlet pressure loss, compressor discharge pressure, and bearing temperature which may stand-in for any of the following fuel gas inner cavity pressure, fuel gas temperature, exhaust pressure, inlet filter differential pressure, head loss, measured exhaust pressure loss, and tank temperature, or a combination thereof. Accordingly, a sensor may be used as a surrogate sensor "standing in" for one or more other sensors, including sensors of different types. For example, the first measurement and the second measurement types may include temperature, pressure, clearance measurements (e.g., distances between stationary and rotating component), speed (e.g., RPM), flow rates, electrical values (e.g., amperage, voltage, resistance, and capacitance), fuel type, and fluid level. Accordingly, depending on the model, any of the first type of measurements may be transformed into the second type of measurements based on the surrogacy techniques described herein. For example, flow rate may be converted to speed, clearance may be converted to temperature, fluid level may be converted to pressure, and so on. Accordingly, a first sensor type (e.g., temperature, pressure, clearance measurements (e.g., distances between stationary and rotating component), speed (e.g., RPM), flow rates, electrical values (e.g., amperage, voltage, resistance, capacitance), fuel type, fluid level, or combination thereof,) may be used as a stand-in or surrogate for a second, different sensor type (e.g., temperature, pressure, clearance measurements (e.g., distances between stationary and rotating component), speed (e.g., RPM), flow rates, electrical values (e.g., amperage, voltage, resistance, capacitance), fuel type, fluid level, or combination thereof).

The embodiments described below include a "quadratic regression" model tuned to a continuous emissions monitoring system (CEMS) to improve the accuracy of an empirically derived emissions model for gas turbine combustion control. The CEMS may include 4 components or systems: 1) an emissions monitoring system, 2) an emissions model(s), 3) a quadratic regression model and 4) a rough tuning algorithm or process. The emissions model(s) and emissions monitoring system are used to tune the quadratic regression model to current gas turbine emissions. Once the quadratic regression model is tuned, the rough tuning algorithm compares the gas turbine measurement from the emissions monitoring system measurement and the output of the quadratic regression model and applies a tuning bias to reduce any error between the emission monitoring measurement and the quadratic regression model.

Further, the CEMS may use surrogate measurements instead of or additional to certain measurements. By using multiple surrogates, in type and in kind, to determine other measurement(s) or parameter(s), the CEMS may forgo relying on a single measurement or parameter. That is, rather than relying, on a measurement such as pressure, the techniques described herein may additionally or alternatively use a surrogate (e.g., temperature), for example, to determine emissions levels. This, in turn, may increase the reliability, accuracy, and predictive capability of the models, which may provide for improved model based control. Further, as will be described in further detail below, the CEMS may tune the models in real-time, in some embodiments without previous knowledge (e.g., field data collection) of the relationships between surrogates and desired measurements or parameters, thereby increasing the accuracy of the models. Additionally, by tuning the models without relying on previous knowledge of the relationships between surrogate parameters and desired parameters, the CEMS may quickly re-tune any models after components of the power production machinery are updated and/or replaced. The CEMS may also suspend or disregard tuning of the models. For instance, the CEMS may suspend tuning of the models when the surrogate measurements or parameters, the derived measurements or parameters, and/or the tuned models indicate that the power production machinery is operating in relatively constant operating conditions and environment.

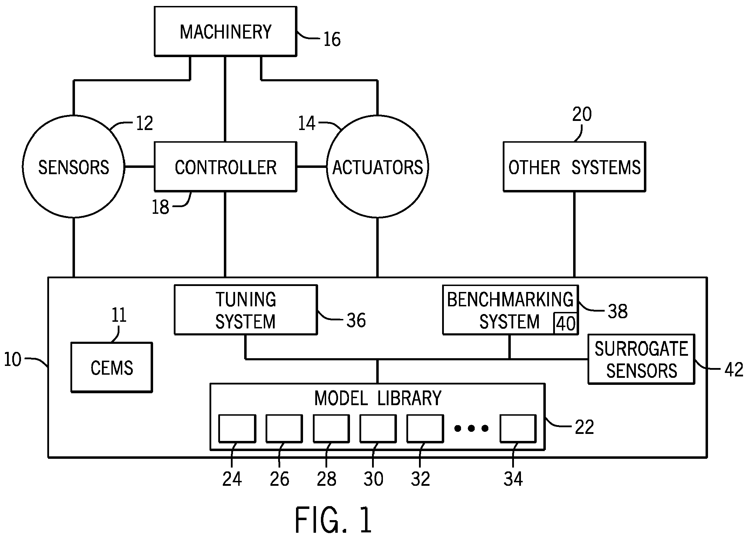

With the foregoing in mind, FIG. 1 is a block diagram illustrating an embodiment of a model-based control system (MBCS) 10 that may be communicatively coupled to sensors 12 and actuators 14, which in turn may be coupled to machinery 16. The MBCS 10 may include (e.g., as a subsystem) or be coupled to a continuous emissions monitoring system (CEMS) 11. The sensors 12 may provide inputs to the MTCS 10, and may include, for example, pressure sensors, temperature sensors, flow sensors, status and position indicators (e.g. limit switches, Hall effect switches, acoustic proximity switches, linear variable differential transformers (LVDTs), position transducers), and the like, connected to and the machinery 16. The actuators 14 may include switches, valves, motors, solenoids, positioners, and other devices, suitable for moving or controlling a mechanism or system within the machinery 16. The machinery 16 may be any type of turbomachinery, power production machinery (e.g.., gas turbine system, steam turbine system, wind turbine system, hydroturbine system, combustion engine, hydraulic engine, electric generator), and non-power production machinery (e.g., pump, valve).

In certain embodiments, the MTCS 10 may be provided as a subsystem of a controller 18 that is coupled to the machinery 16 and may control the actuators 14. In such embodiments, the MTCS 10 may include non-transitory machine readable media storing code or computer instructions that may be used by a computing device (e.g., the controller 18) to implement the techniques disclosed herein. In other embodiments, the MTCS 10 may constitute the entirety of the controller 18; that is, the MTCS 10 may be responsible for all of the control responsibilities for the machinery 16. In still other embodiments, the MTCS 10 may be included in a distributed control system (DCS), a manufacturing execution system (MES), a supervisor control and data acquisition (SCADA) system, and/or a human machine interface (HMI) system. Likewise, the CEMS 11 may be provided as a subsystem of the MTCS 10, or as a separate system included in a separate DCS, MES, and/or SCADA system and communicatively coupled to the MTCS 10.

The MTCS 10 may also be coupled to other systems 20, such as electronic logs (e.g., maintenance databases), paper logs, power production logs, manufacturer records (e.g., expected lifetime data, repair data, refurbishment data), industry records (e.g., industry failure rate data, industry standards), economic markets (e.g., power futures market, cap and trade markets, "green" credit markets), regulatory systems (e.g., regulatory compliance systems, pollution control systems), insurance systems (e.g., lost power production revenue insurance, business interruption insurance), maintenance optimization systems, operational optimization systems, economic optimization systems, and so on. The MTCS 10 may use the data provided by the other systems 20 to tune the models used to determine the performance of the machinery 16, which is described in further detail below.

As shown in FIG. 1, the MTCS 10 may include a model library 22 containing models 24, 26, 28, 30, 32, and 34. The models 24-34 may include various types of relationships between certain measurements or parameters of the machinery 16 during operations of the machinery 16. In certain embodiments, the models 24-34 may be physics-based models determined based on known physical relationships between parameters (e.g., a known relationship between pressure and volume) as well as relationships captured through both lab and onsite testing. For example, the models 24, 26, 28, 30, 32, and 34 may include one or more emissions model that may take as input a first set of parameters of a gas turbine system (e.g.., speed, temperatures, fluid flows, pressures, fuel type) and used by the CEMS 11 to output a second set of parameters related to emissions (e.g., particulate count, concentration of certain chemicals such as nitrogen oxides [NOx], hydrocarbons (HC), carbon monoxide (CO), and other emissions), as described in more detail below.

The MTCS 10 may also include a tuning system 36, which may tune the models 24-34, including emissions model 34, as described further below. Additionally, the MTCS 10 may include surrogate sensors 38. Although the surrogate sensors 38 may essentially be physical sensors 12, the MTCS 10 may use the data collected by the surrogate sensors 38 as inputs to derive virtual sensors "measuring" values that may have different types as those measured by the surrogate sensor 38. For example, the surrogate sensor 38 may physically measure pressure, while the derived virtual sensor based on data collected via the surrogate sensor 38 may "measure" temperature, as will be described in further detail below.

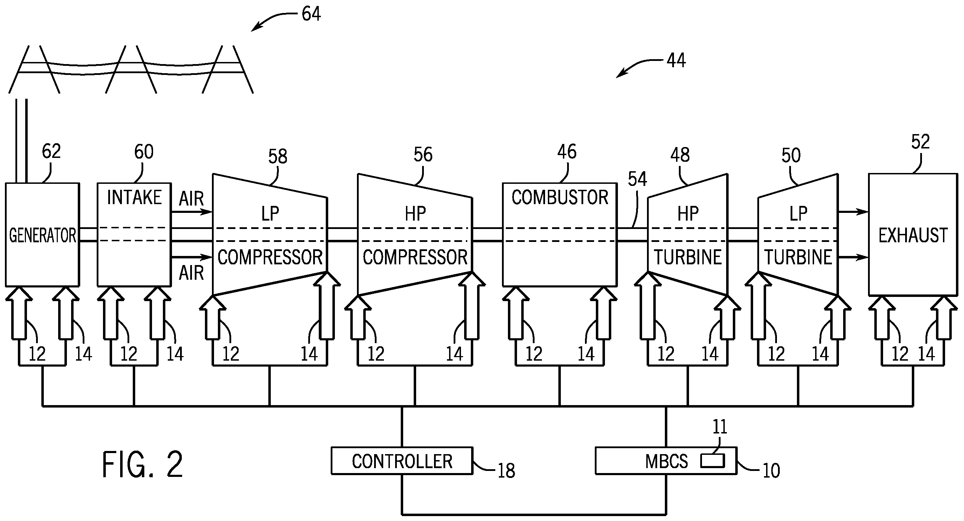

Turning now to FIG. 2, an example of using the MTCS 10 and the CEMS 11 to apply surrogacy and model tuning to machinery 16 in the form of a turbine system 40 is provided. As depicted, the turbine system 40 may include a combustor 42, which may receive fuel that has been mixed with air for combustion in a chamber within combustor 42. This combustion creates hot pressurized exhaust gases. The combustor 42 directs the exhaust gases through a high pressure (HP) turbine 44 and a low pressure (LP) turbine 46 toward an exhaust outlet 48. The HP turbine 44 may be part of a HP rotor. Similarly, the LP turbine 46 may be part of a LP rotor. As the exhaust gases pass through the HP turbine 44 and the LP turbine 46, the gases force turbine blades to rotate a drive shaft 50 along an axis of the turbine system 40. As illustrated, drive shaft 50 is connected to various components of the turbine system 40, including a HP compressor 52 and a LP compressor 54.

The drive shaft 50 may include one or more shafts that may be, for example, concentrically aligned. The drive shaft 50 may include a shaft connecting the HP turbine 44 to the HP compressor 52 to form a HP rotor. The HP compressor 52 may include blades coupled to the drive shaft 50. Thus, rotation of turbine blades in the HP turbine 44 causes the shaft connecting the HP turbine 44 to the HP compressor 52 to rotate blades within the HP compressor 52. This compresses air in the HP compressor 52. Similarly, the drive shaft 50 includes a shaft connecting the LP turbine 46 to the LP compressor 54 to form a LP rotor. The LP compressor 54 includes blades coupled to the drive shaft 50. Thus, rotation of turbine blades in the LP turbine 46 causes the shaft connecting the LP turbine 46 to the LP compressor 54 to rotate blades within the LP compressor 54. The rotation of blades in the HP compressor 52 and the LP compressor 54 compresses air that is received via an air intake 56. The compressed air is fed to the combustor 42 and mixed with fuel to allow for higher efficiency combustion. Thus, the turbine system 40 may include a dual concentric shafting arrangement, wherein LP turbine 46 is drivingly connected to LP compressor 54 by a first shaft portion of the drive shaft 50, while the HP turbine 44 is similarly drivingly connected to the HP compressor 52 by a second shaft portion of the drive shaft 50 internal and concentric to the first shaft. Shaft 50 may also be connected to an electrical generator 58. The generator 58 may be connected to an electrical distribution grid 60 suitable for distributing the electricity produced by the generator 58.

As shown in FIG. 2, multiple sensors 12 and actuators 14 may be disposed in or around various components of the turbine system 40. The sensors 12 may be configured to collect data regarding various parameters related to the operation and performance of the turbine system 40, such as parameters related to the components of the turbine system 40 as well as certain materials (e.g., air, fuel, etc.) inputted into or outputted by the turbine system 40. For example, the sensors 12 may measure environmental conditions, such as ambient temperature and ambient pressure, as well as a plurality of engine parameters related to the operation and performance of the turbine system 40, such as, exhaust gas temperature, rotor speed, engine temperature, engine pressure, gas temperature, engine fuel flow, vibration, clearance between rotating and stationary components, compressor discharge pressure, exhaust emissions/pollutants, and turbine exhaust pressure. In certain embodiments, the sensors 12 may also measure data related to the actuators 14, such as valve position, and a geometry position of variable geometry components (e.g., air inlet).

Typically, in model-based control systems, the data collected by the sensors 12 is inputted into the models, which generates data quantifying the operation and performance of the machinery 16. Based on the generated data, the control system then determines a number of control actions to take in order to improve and/or maintain the performance of the machinery 16 and controls the actuators 14 as necessary to perform the control actions. For example, to determine the compressor pressure ratio of the HP compressor 52 or the LP compressor 54, one or more pressure sensors 12 may be disposed in the drive shaft 50 before and after the HP compressor 52 and the LP compressor 54. That is, in certain derivations, the models may rely only on inputs directly related to the desired derivations of the models. In other derivations, the models may use inputs indirectly related to the desired derivations. For example, fuel gas inner cavity pressure, fuel gas temperature, exhaust pressure, inlet-filter-differential-pressure can be used as surrogates for a variety of other sensors (e.g. head-loss), mass flow, and so on.

Typically, the models used by the model-based control systems may be tuned, in that certain parameters and/or constants in the physical and empirical relationships between parameters may be adjusted in order to improve the accuracy of the models. However, while the models may be tuned to account for variations in field conditions, such tuning typically occurs only during commissioning of the machinery 16. That is, the models may be tuned, usually manually, when the machinery 16 and the controller 18 are installed. The models may not be re-tuned to account for variations in field conditions that occur due to the operation and/or degradation of the sensors 12, the actuators 14, and components of the machinery 16. Further, once the models are tuned during the initial installation of the machinery 16 and the controller 18, the models may not be re-tuned if any components of the machinery 16 and the controller 18 are updated or replaced. Additionally, the models may not be individually tuned to account for different modes of operations for the machinery 16.

To improve the accuracy of the models 24-34 and the performance of the machinery 16, the MTCS 10 may use the tuning system 36 and the surrogate sensors 38 to automatically tune the models 24-34 and determine one more parameters of the machinery 16, respectively, as noted above. In particular, the MTCS 10 may determine one or more surrogate measurements or parameters that may be mathematically related to a desired measurement or parameter of the machinery 16. The MTCS 10 may then select one of the models 24-34 that include the relationship (e.g., mathematical relationship) between the surrogate(s) and the desired measurement(s) or parameter(s), and may use the selected model to derive the desired measurement(s) or parameter(s). Further, the tuning system 36 may tune the selected model based on the surrogate measurement(s) or parameter(s), and/or the relationship between the surrogate measurement(s) or parameter(s) and the desired measurement(s) or parameter(s). In use, the controller 18 may derive one or more virtual sensors based on physical surrogate sensor 38 readings. The virtual sensors may then be used to check their corresponding physical sensor, as a replacement to the physical sensor, and/or may also be used to add a second channel of data additional to the first channel of data provided by the physical sensor corresponding to the virtual sensor. By applying the surrogacy techniques described herein, increased robustness and capability for the system 10 may be provided.

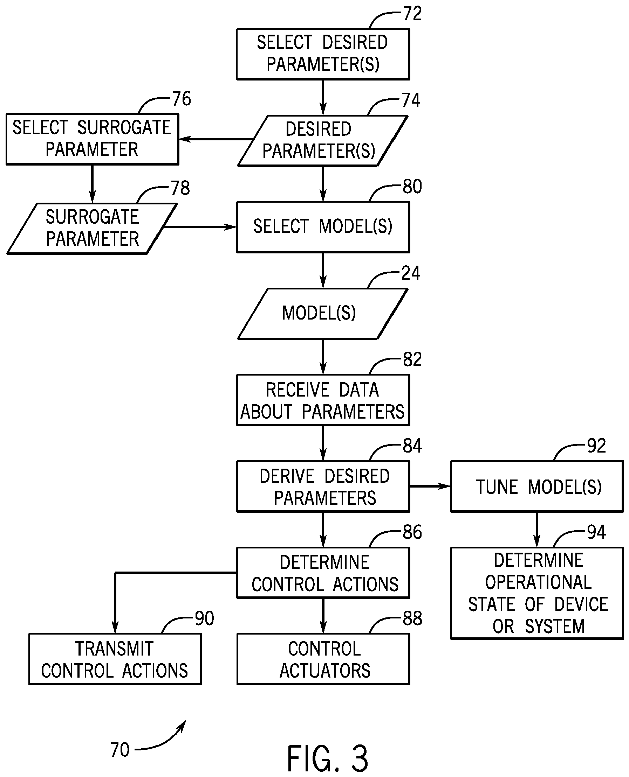

FIG. 3 illustrates an embodiment of a process 70 that the MTCS 10 and the tuning system 36 may use to determine a desired measurement or parameter of the machinery 16 and tune the models 24-34, for example based on surrogate sensors 38. Although the process 70 is described below in detail, the process 70 may include other steps not shown in FIG. 3. Additionally, the steps illustrated may be performed concurrently or in a different order. The process 70 may be implemented as computer instructions or executable code stored in the memory and executed by the processor of the MTCS 10 and the controller 18.

Beginning at block 72, the MTCS 10 may select a desired measurement or parameter 74 of the machinery 16 to derive. For instance, the MTCS 10 may select the air pressure of the drive shaft 50 as a desired parameter 74. At block 76, the MTCS 10 may then select one or more surrogate measurements or parameters 78 that may be related (e.g., mathematically related) to the desired parameter 74. The surrogate parameter(s) 78 may be determined based on, for example, certain relationships between two variables. Following the earlier example, the MTCS 10 may select air temperature in the drive shaft 50 as a surrogate parameter 78 based on the relationship between pressure and temperature in the form of Boyle's law. In other embodiments, the surrogate measurements or parameter(s) 78 may be determined based on empirically determined relationships between two types of measurements or parameters (e.g., relationships determined via lab and/or field testing). In certain embodiments, the MTCS 10 may also determine boundary measurements or parameters for the surrogate parameter(s) 78. That is, while there may be no observable or a weak correlation between a particular measurement or parameter and the desired measurements or parameter 74, the parameter may still be used to set boundary conditions for the surrogate measurements or parameter(s) 78. These boundary measurements or parameters may be used to determine when the data collected by the surrogate sensor(s) 38 associated with the surrogate measurements or parameter(s) 78 is unsuitable and may be disregarded by the tuning system 36, which is described further below.

After the MTCS 10 determines the surrogate parameter(s) 78, the MTCS 10 may then select one or more models 24-34 from the model library 22 at block 80. As will be appreciated, the models 24-34 may include one or more relationships between the surrogate measurements or parameter(s) 78 and the desired measurements or parameter 74. Once the MTCS 10 determines the desired measurement or parameter 74, the surrogate measurement(s) or parameter(s) 78, and the model(s) 24-34, the MTCS 10 may receive data representative of the surrogate measurement(s) or parameter(s) 78 via the surrogate sensors 38 at block 82. As noted above, the surrogate sensors 38 are sensors 12 disposed within and around the machinery 16. However, they are designated as surrogate sensors 38 to reflect that the data collected by the surrogate sensors 38 is used specifically to determine the desired measurements or parameter 74. At block 84, the MTCS 10 then uses the data from the surrogate sensors 38 and the model(s) 24-34 to determine the desired measurements or parameter 74. By using surrogate(s) 78, and, in certain embodiments, boundary measurements or parameters, the MTCS 10 may increase the number of data streams or points, which may increase the accuracy of the calculation of the desired measurement or parameter 74 when compared to other model-based control systems that rely on a single operating point or multiple similar operating points (e.g., determining compressor pressure ratio based on a single pressure measurement).

Once the MTCS 10 derives the desired measurements or parameter 74, the MTCS 10 may then determine one more control actions to take at least partially based on the derived desired measurements or parameter at block 86. For example, the MTCS 10 may derive an air-to-fuel ratio as the parameter 74, and then adjust a position of a corresponding fuel valve based on the derived air-to-fuel ratio (e.g., close the valve if the air-to-fuel ratio is low). The MTCS 10 may then either control the actuators 14 directly to perform the control actions or transmit the control actions to a separate controller, such as the controller 18, at blocks 88 and 90, respectively.

In addition to controlling the actuators 14, the MTCS 10 also uses the tuning system 36 to tune the model(s) 24-34 at block 92, as shown in FIG. 3. In one embodiment, the tuning system 36 may perform real-time meta regression analysis of the model(s) 24-34. While other empirical methods for tuning models (e.g., matrix algebra, fuzzy logic, neuro-fuzzy models, etc.), may be used, in a preferred embodiment, using regression analysis allows the tuning system 36 to exploit the relationships between surrogate parameters and desired parameters as well as tune the models 24-34 in real-time. In particular, the tuning system 36 may use a least-squares fitting method that includes summations of various variables to determine the best model for the relationship between a desired parameter and a surrogate parameter. By using summations, the tuning system 36 may perform regression analysis not only in real-time but also automatically once enough data has been collected regarding the surrogate parameter(s) 78 and the desired parameter 74. For instance, in certain embodiments, the summations in the regression analysis may be stored in the memory of the MTCS 10 or the tuning system 36, allowing the tuning system 36 to determine the values of the summations at any time so long as there is sufficient data.

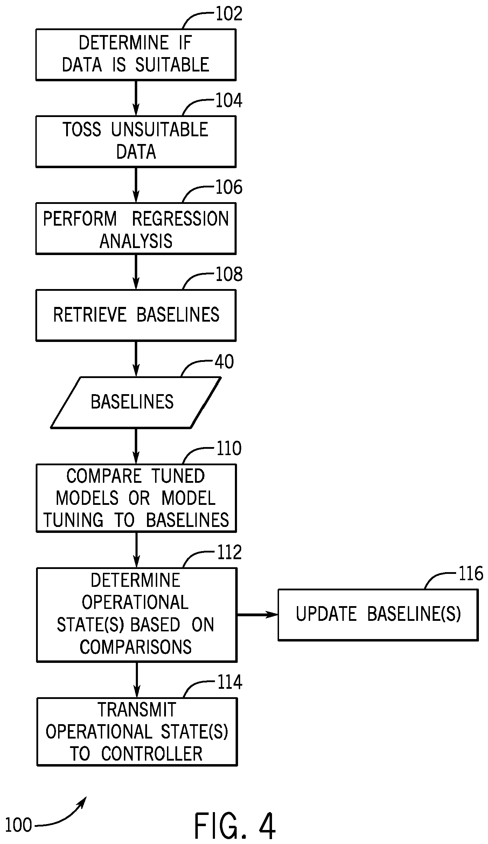

FIG. 4 illustrates an embodiment of a process 100 that the tuning system 36 may use to tune the models 24-34 during block 92 of the process 70. Although the process 100 is described below in detail, the process 100 may include other steps not shown in FIG. 4. Additionally, the steps illustrated may be performed concurrently or in a different order. The process 100 may be implemented as computer instructions or executable code stored in the memory and executed by the processor of the MTCS 10 and the controller 18.

Beginning at block 102, the tuning system 36 may evaluate the data related to the surrogate measurement(s)/parameter(s) 78. Based on the value of the data relative to certain thresholds, the tuning system 36 may determine whether the data collected by the surrogate sensor(s) 38 is suitable. For instance, as noted above, certain boundary measurements/parameters may be used to set boundary conditions for the surrogate measurement(s)/parameter(s), outside of which the data for the surrogate measurement(s)/parameter(s), and, subsequently, the operation of the surrogate sensors 38, may be unsuitable. At block 104, the tuning system 36 may discard any unsuitable data. As noted above, the MTCS 10 may use multiple surrogate measurement(s)/parameter(s) 78, both in type and number, to determine the desired measurement/parameter 74. Accordingly, the data collection process may be robust enough to withstand discarding a portion of the data. Further, in certain embodiments, if the tuning system 36 determines that a majority of the data related to the surrogate measurement(s)/parameter(s) 78 is unsuitable, the tuning system 36 may configure the MTCS 10 to rely solely on the current version of the model(s) 24-34 until more suitable data for the surrogate measurement(s)/parameter(s) 78 is available.

At block 106, the tuning system 36 may perform a meta regression analysis on the model(s) 24-34 using, for example, Equation 1 below, wherein *y_desired* is equivalent to the desired parameter 74, *x* is equivalent to the output of the relationship between the desired parameter 74 and the surrogate parameter(s) 78 (e.g., models 24-34) and *z* is equivalent to the surrogate parameter(s) 78. The variables *a*, *b*, and *c* may be found using summations in a least squares fitting framework as described above. In embodiments in which the MTCS 10 uses purely empirical models to control the machinery 16, *x* is equal to 1, *z* represents the surrogate parameter(s) 78, and *y_desired* represents the desired parameter 74. However, in an exemplary embodiment, *x* represents the model(s) 24-34, which define the relationship between the desired parameter 74 and the surrogate parameter(s) 78. That is, the physics based model(s) 24-34 are empirically tuned in real-time during operation of the machinery 16. By using the current values of the desired parameter 74, the surrogate parameter(s) 78, and the summations, the tuning system 36 may tune the model(s) 24-34 without any previous knowledge of the particular relationship for the machinery 16; this may prove especially advantageous if parts of the machinery 16, the sensors 12, the actuators 14, or the controller 18 are updated or replaced. As will be appreciated, although the embodiments described herein may use Equation 1 to perform quadratic regression analysis, other equations or sets of equations may be used to determine the "best" fit for the model. For example, other equations may use varying numbers of desired parameters, surrogate parameters, and learned (i.e., empirical) values. Further, in other embodiments, the tuning system 36 may use another type of regression analysis, such as linear regression analysis.

$$y\_desired = (az^2 + bz + c)x \qquad (1)$$

When using regression analysis (e.g., Equation 1), the tuning system 36 may account for various zones when deriving the "best" fit for the mode. As noted above, in certain embodiments, the tuning system 36 may tune the models based on independent modes of operation of the machinery 16. For example, the machinery 16 may have various modes of operation based on the desired emissions level of the machinery 16 (e.g., low emissions mode), based on the desired speed of the power generation of the machinery 16, combustion modes, or any number of other factors. Accordingly, when performing the regression analysis, the tuning system 36 may also receive information relating to various zones that represent the modes of operation for the machinery 16. Based on the zone information, the tuning system 36 may determine when the machinery 16 enters a new mode of operation. Once the tuning system 36 determines that the machinery 16 has entered a new mode, the tuning system 36 may revert the model(s) 24-34 to their state(s) before the mode began, as is described in further detail below. In certain embodiments, the tuning system 36 may also store the tuned model(s) 24-34 and the associated zone information in the memory of the MTCS 10 so that the MTCS 10 may immediately use the tuned model(s) 24-34 when the machinery 16 enters that particular mode of operation again.

Once the tuning system 36 determines any changes to the model(s) 24-34, the tuning system 36 may determine the degree of tuning applied to the model(s) 24-34 at decision block 108. That is, the tuning system 36 may determine whether the values of *a*, *b*, and *c* and/or the values of the desired parameter 74 are relatively constant. If the degree to which the model(s) 24-34 are tuned is small, then the tuning system may suspend tuning of the model(s) 24-34 at block 110, as the situation indicates a relatively constant operating condition and environment.

If the degree of tuning is more significant, then the tuning system 36 may proceed to block 112, at which it determines whether a continuous or discrete tuning period should be applied to the model(s) 24-34. As mentioned above, in addition to real-time time tuning, the MTCS 10 may also be configured to tune the model(s) 24-34 based on independent modes of operation of the machinery 16.

If the tuning system 36 determines that a continuous tuning period should be applied, then the tuning system 36 may return to evaluating the data related to the surrogate parameter(s) 78 at block 102. During a continuous tuning period, the tuning system 36 may be configured to repeatedly tune the model(s) 24-34. That is, if the tuning system 36 applies a continuous tuning period A to the model(s) 24-34, then the tuning system 36 may tune the model(s) 24-34 over several small periods B within the continuous tuning period A. In other words, the tuning system 36 may dither the model(s) 24-34, which may increase the accuracy of the model(s) 24-34, particularly for any extrapolations performed during the tuning.

As stated above, the tuning system 34 may apply a discrete tuning period to the model(s) 24-34 based on independent modes of operation of the machinery 16. If the tuning system 36 determines that a discrete tuning period should be applied, then at decision block 114, the tuning system 36 may determine whether the particular mode of operation applied to the machinery 16 has concluded. For instance, the tuning system 36 may receive a signal from the controller 18 indicating that a mode of operation (e.g., low emissions mode) has ended. If the mode of operation has not ended, then the tuning system 36 may return to evaluating the data related to the surrogate parameter(s) 78 at block 102.

If the mode of operation has ended, then, at block 116, the tuning system 36 may revert the model(s) 24-34 to their previous state(s) before the mode of operation began, as mentioned above. As stated above, the modes of operation for the machinery 16 may be determined based on specific desired outcomes and outputs of the machinery 16 and, in certain embodiments, may generally be independent. As such, reverting the model(s) 24-34 to a previous state at the end of each mode of operation may enable the tuning system 36 to independently tune the model(s) 24-34 for multiple modes of operation without allowing one tuning to influence another. Further, in some embodiments, the tuning system 36 may also exclude the data collected during the mode of operation from future tunings to reduce the influence of the tuning in another mode of operation or during a continuous tuning period.

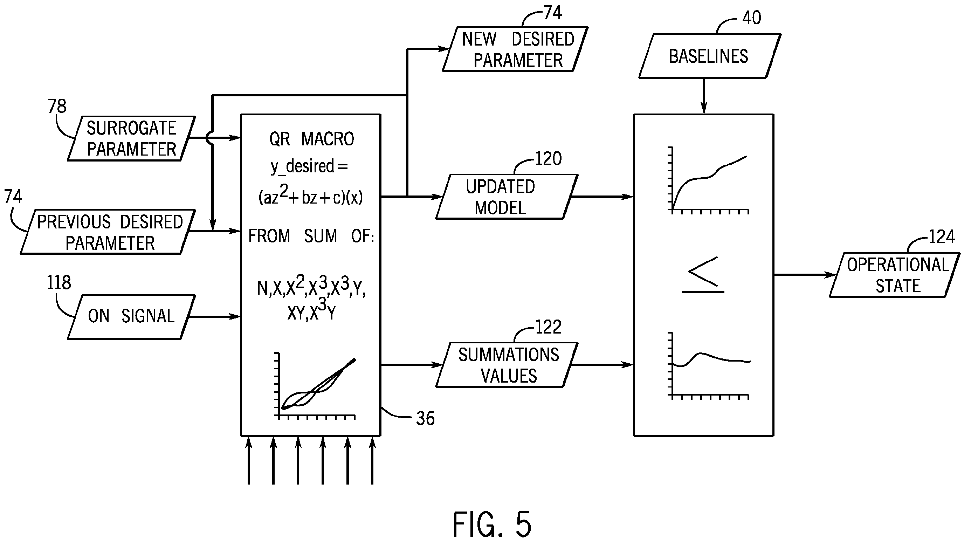

FIG. 5 depicts a block diagram of an exemplary configuration of the MTCS 10 and the tuning system 36.

As shown, the tuning system 36 may receive the previous desired parameter 74 and the surrogate parameter 78 as inputs. The tuning system 36 may also receive one or more boundary parameters 118, which establish boundary conditions for the surrogate parameter 78. The tuning system 36 may have knowledge of the model(s) 24-34 being tuned and the zones associated with the particular model(s) 24-34. Further, the tuning system 36 may also receive an ON signal 120 that tells the tuning system 36 whether to tune the model 24 (or any of the models described, e.g., 24-34).

Based on these inputs, the tuning system 36 may perform the regression analysis to tune the model 24, as noted above. The tuning system 36 may then output an updated model 124. As will be appreciated, the updated model 124 may be a copy of the previous model 124 when no tuning is applied. The model 24 may also output the values 126 of the summations; in certain embodiments, these values 126 may be stored in the memory of the tuning system 36 and may be used to reduce the computational time and resources for calculating future summations. After tuning, the model 24 may be used to generate a new value for the desired parameter 74, which is then inputted into the tuning system 36 to tune the model(s) 24-34

In certain embodiments, the inputs to the model 24 may include data produced by other models 26-34. That is, multiple surrogate parameters 78 may be used to generate multiple desired parameters 74. These desired parameters 74, in turn, may serve as surrogate parameters 78 for other desired parameters 74, thereby increasing fault tolerance of the tuning system 36.

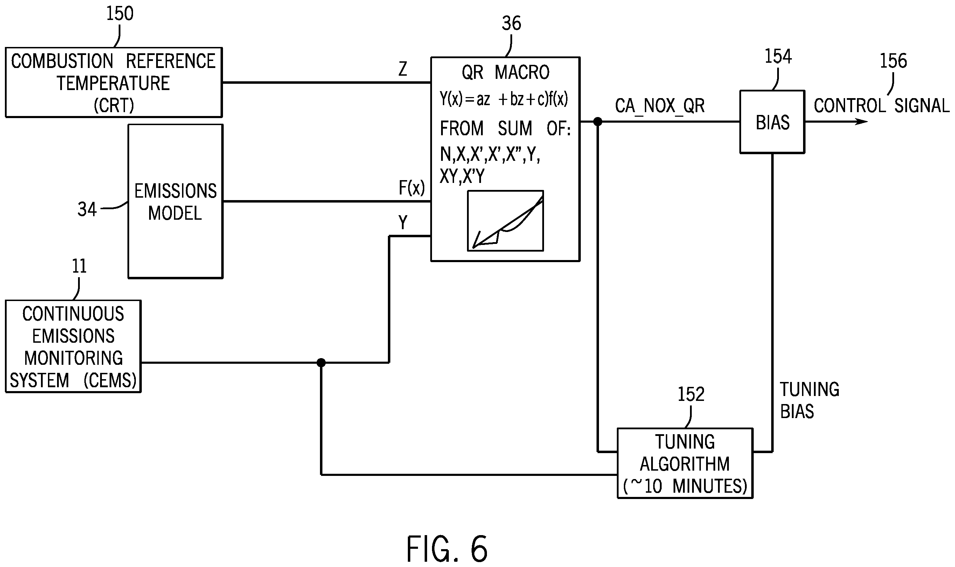

FIG. 6 is a block diagram of an exemplary configuration of the CEMS 11 and the tuning system 36. As shown, the tuning system 36 may use the emissions model 34 as input, and more specifically, as the f(x) input. In the depicted embodiment, the emissions model 34 in turn may model emissions as a function of turbine system 44 operating conditions, fuel composition, and/or environmental conditions. For example, one or more parameters 150 may be used as input into the emissions model 34. In an exemplary embodiment, a combustion reference temperature (CRT) may be used as the input 150 into the model 34, representative of a combustion temperature for the combustor 46. The model 34 may then derive, based on the input 150, certain emissions parameters such as NOx levels, carbon oxides (COx) levels, particulate counts, sulfur oxides (Sox) levels, $N_2$ levels, $O_2$ levels, $H_2O$ levels, hydrocarbon (e.g., CxHx) and so on. The model may include physics based models, neural network based models, computer fluid dynamic models, regression analysis models, and so on.

While, in one exemplary embodiment, input 150 refers to CRT, in other embodiments, input 150 may include additional or alternative parameters, such as any number of parameters related to the turbine system 44, including compressor discharge pressure, inlet guide vane position, load, fuel type, fluid flows related to components of the turbine system 44, pressures related to components of the turbine system 44, temperatures related to components of the turbine system 44, speed related to components of the turbine system 44, clearances (e.g., distance between moving and stationary components of the turbine system 44), generator 62 parameters such as power production and the like. It is also to be noted that the input 150 may include surrogate parameters. For example, speed of turbines 48 and/or 50 may be used as a surrogate for CRT. Likewise, fluid flows, pressures, speeds, and/or loads of any of the components 46, 48, 50, 52, 54, 56, 58, 60, 62 of the turbine system 44 may be used as surrogate(s) for the CRT and part of the input 150.

The tuning system 36 may receive the input parameter(s) 150 as the Z value. The Y tuning value is provided by the CEMS 11. More specifically, the CEMS 11 may be continuously monitoring the turbine system 44 and provide observed or "real world" values Y (e.g., empirical values) as opposed to derived or predicted values f(x). That is, while the emissions model predict certain values f(x), the observed values Y may be used to tune, improve and/or update the emissions model 34. Indeed, by applying the tuning system 36 as described earlier, a regression analysis may be used to tune the emissions model in real time. Parameters 151 (e.g., CA_NOX_QR) may be outputted by the tuning system 36. For example, the parameters 151 may, in an exemplary embodiment, be a quadratic regression setpoint suitable for maintaining desired NOx emissions level, such as a temperature setpoint for combustion. The quadratic regression setpoint is not a value but rather a quadratic equation that may change its output based on certain inputs, such as the inputs 150. It is to be understood that other polynomial orders, e.g., degrees greater than 2, may also be used. Other quadratic regression parameters 151 may include fluid flow setpoints, fuel delivery setpoints, pressure setpoints, other temperature setpoints, and so on.

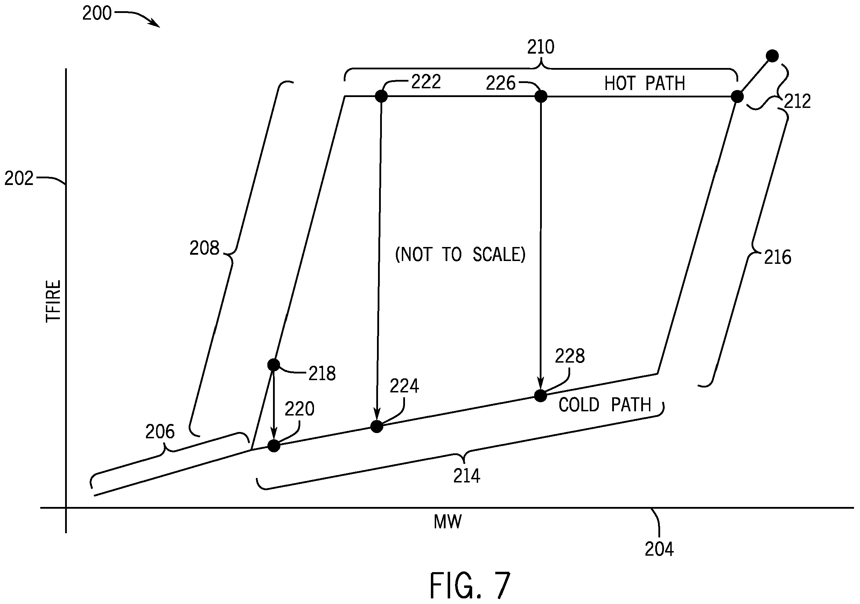

In the depicted embodiment, a tuning algorithm 152 may use as input the parameters observed via the CEMS 11 and the parameter(s) 151 to further adjust or tune the parameter 151. For example, the tuning algorithm 152 may compare a turbine systems 44 measurement from a CEMS 11 and the output 151 and applies a tuning bias 154 to reduce any error between the CEMS 11 measurement and the quadratic regression model output 151. The tuning bias 154 may then be used to provide a control signal 156 to control the turbine system 156, such as a temperature control signal, fuel flow signal, signal to actuate an actuator such as a pump, switch, relay, and so on. By dynamically tuning the model 34 and by using empirical data in the tuning process, emissions may be more accurately controlled. Indeed, by using the techniques described herein, the turbine system 44 may follow a cold path during operations, as described below with respect to FIG. 7.

FIG. 7 depicts a chart 200 having a Y-axis 202 representative of a firing temperature for the turbine system 44 and an X-axis 204 representative of megawatts produced. In operations, such as during startup, a hot path is usually followed. For example, to follow the hot path, the controller 18 may follow paths 206, 208, 210, and 212. However, hot path operations may result in increased wear and tear on equipment. Accordingly, a cold path may be followed, which respects emissions limits by applying the CEMS 11 and tuning the emissions model 34 as described earlier in FIG. 6. The input 150 may include a desired Tfire temperature on the axis 202, and the tuning system 36 may then provide for the control signal 156 suitable to arrive at the desired Tfire temperature. In this manner, megawatts produced at points 218, 222, and 226, for example, may now be produced at points 220, 224, 228, respectively, following the cold path through segments 206, 214, and 216. By following the cold path and maintaining emissions compliance, the tuned emissions model 34 may provide for enhanced component life for the components of the turbine system 44 and improved operations.

Technical effects of the invention include monitoring and controlling power production machinery using a model-based control system. In particular, certain embodiments may improve the accuracy of the models used by the model-based control system. For example, the model-based control system may dynamically, empirically tune an emissions model. The tuned emission model may then be used to provide for a quadratic regression setpoints useful in deriving a control signal to arrive at desired emissions. Further, the model-based control system may enable cold path operations of power production machinery as opposed to hot path operations, thus improving component life.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following clauses:

1. A model-based control system, configured to:

select a desired parameter of a machinery configured to produce power and to output emissions;

select an emissions model configured to use the desired parameter as input and to output an emissions parameter;

tune the emissions model via a tuning system to derive a polynomial setpoint; and

control one or more actuators coupled to the machinery based on the polynomial setpoint.

2. The model-based control system of clause 1, wherein the model-based control system is configured to tune the emissions model in real-time.

3. The model-based control system of clause 1, wherein the model-based control system is configured to continuously tune the emission model via empirical data received from a continuous emissions monitoring system (CEMS).

4. The model-based control system of clause 1, wherein the model-based control system is configured to compare, via a tuning algorithm, a machinery measurement observed via the CEMS and a value derived via the polynomial setpoint and applies a tuning bias to reduce any error between the machinery measurement and the polynomial setpoint.

5. The model-based control system of clause 1, wherein the model-based control system is configured to select a surrogate parameter, wherein the emissions model is configured to use the surrogate parameter as a stand-in for the desired parameter, wherein the desired parameter comprises a first measurement type, and wherein the surrogate parameter comprises a second measurement type different than the first measurement type.

6. The model-based control system of clause 1, wherein the desired parameter comprises a combustion reference temperature (CRT).

7. The model-based control system of clause 5, wherein the surrogate parameter comprises a compressor discharge pressure, a turbine speed, a fluid flow, an inlet guide vane position, or a combination thereof.

8. The model-based control system of clause 1, wherein the model-based control system is configured to operate the machinery by following a cold path based on the polynomial setpoint.

9. The model-based control system of clause 1, wherein the polynomial setpoint comprise a quadratic regression setpoint.

10. A method, comprising:

selecting a desired parameter of a machinery configured to produce power and to output emissions;

selecting an emissions model configured to use the desired parameter as input and to output an emissions parameter;

tuning the emissions model via a tuning system to derive a polynomial setpoint; and

controlling one or more actuators coupled to the machinery based on the polynomial setpoint.

11. The method of clause 10, comprising tuning the emissions model in real-time.

12. The method of clause 10, comprising continuously tuning the emission model via empirical data received from a continuous emissions monitoring system (CEMS).

13. The method of clause 10, comprising, comparing, via a tuning algorithm, a machinery measurement observed via the CEMS and a value derived via the polynomial setpoint and applying a tuning bias to reduce any error between the machinery measurement and the polynomial setpoint.

14. The method of clause 10, comprising selecting a surrogate parameter, wherein the emissions model is configured to use the surrogate parameter as a stand-in for the desired parameter, wherein the desired parameter comprises a first measurement type and wherein the surrogate parameter comprises a second measurement type different than the first measurement type.

15. The method of clause 10, wherein the desired parameter comprises a combustion reference temperature (CRT).

16. The method of clause 14, wherein the surrogate parameter comprises a compressor discharge pressure, a turbine speed, a fluid flow, an inlet guide vane position, or a combination thereof.

17. A non-transitory, computer-readable medium comprising executable code comprising instructions configured to:

select a desired parameter of a machinery configured to produce power and to output emissions;

select an emissions model configured to use the desired parameter as input and to output an emissions parameter;

tune the emissions model via a tuning system to derive a polynomial setpoint; and

control one or more actuators coupled to the machinery based on the polynomial setpoint.

18. The non-transitory, computer-readable medium of clause 17, wherein the instructions are configured to select a surrogate parameter, wherein the emissions model is configured to use the surrogate parameter as a stand-in for the desired parameter, wherein the desired parameter comprises a first measurement type, and wherein the surrogate parameter comprises a second measurement type different than the first measurement type.

19. The non-transitory, computer-readable medium of clause 18, wherein the surrogate parameter comprises a compressor discharge pressure, a turbine speed, a fluid flow, an inlet guide vane position, or a combination thereof.

20. The non-transitory, computer-readable medium of clause 17, wherein the instructions are configured to adjust the one or more models in real-time.

**Claims**

1. A model-based control system (10), configured to:

   select a desired parameter (74) of a machinery (16) configured to produce power and to output emissions;
   select an emissions model (34) configured to use the desired parameter (74) as input (150) and to output (151) an emissions parameter;
   tune the emissions model (34) via a tuning system (36) to derive a polynomial setpoint; and
   control one or more actuators (14) coupled to the machinery (16) based on the polynomial setpoint.

2. The model-based control system (10) of claim 1, wherein the model-based control system (10) is configured to tune the emissions model (34) in real-time.

3. The model-based control system (10) of claim 1, wherein the model-based control system (10) is configured to continuously tune the emission model (34) via empirical data received from a continuous emissions monitoring system (CEMS) (11).

4. The model-based control system (10) of claim 1, wherein the model-based control system (10) is configured to compare, via a tuning algorithm (152), a machinery (16) measurement observed via the CEMS (11) and a value derived via the polynomial setpoint and applies a tuning bias (154) to reduce any error between the machinery (16) measurement and the polynomial setpoint.

5. The model-based control system (10) of claim 1, wherein the model-based control system (10) is configured to select a surrogate parameter (78), wherein the emissions model (34) is configured to use the surrogate parameter (78) as a stand-in for the desired parameter (74), wherein the desired parameter (74) comprises a first measurement type, and wherein the surrogate parameter (78) comprises a second measurement type different than the first measurement type and wherein the surrogate parameter (78) comprises a compressor discharge pressure, a turbine speed, a fluid flow, an inlet guide vane position, or a combination thereof..

6. The model-based control system (10) of claim 1, wherein the desired parameter (74) comprises a combustion reference temperature (CRT).

7. The model-based control system (10) of claim 1, wherein the model-based control system (10) is configured to operate the machinery (16) by following a cold path based on the polynomial setpoint and wherein the polynomial setpoint comprise a quadratic regression setpoint.

8. A method (70), comprising:

   selecting (72) a desired parameter (74) of a machinery (16) configured to produce power and to output (151) emissions;
   selecting (80) an emissions model (34) configured to use the desired parameter (74) as input (150) and to output (151) an emissions parameter;
   tuning (92) the emissions model (34) via a tuning system (36) to derive a polynomial setpoint; and
   controlling (86) one or more actuators (14) coupled to the machinery (16) based on the polynomial setpoint.

9. The method (70) of claim 8, comprising tuning (92) the emissions model (34) in real-time.

10. The method (70) of claim 8, comprising continuously tuning (92) the emission model via empirical data received from a continuous emissions monitoring system (CEMS) (11).

11. The method (70) of claim 8, comprising, comparing, via a tuning algorithm (152), a machinery (16) measurement observed via the CEMS (11) and a value derived via the polynomial setpoint and applying a tuning bias (154) to reduce any error between the machinery (16) measurement and the polynomial setpoint.

12. The method (70) of claim 8, comprising selecting a surrogate parameter (78), wherein the emissions model (34) is configured to use the surrogate parameter (78) as a stand-in for the desired parameter (74), wherein the desired parameter (74) comprises a first measurement type and wherein the surrogate parameter (78) comprises a second measurement type different than the first measurement type and wherein the surrogate parameter (78) comprises a compressor discharge pressure, a turbine speed, a fluid flow, an inlet guide vane position, or a combination thereof.

13. The method (70) of claim 8, wherein the desired parameter (74) comprises a combustion reference temperature (CRT) (150).

14. A non-transitory, computer-readable medium (18) comprising executable code comprising instructions configured to:

> select a desired parameter (74) of a machinery (16) configured to produce power and to output emissions;
> select an emissions model (34) configured to use the desired parameter (74) as input and to output an emissions parameter;
> tune the emissions model (34) via a tuning system (36) to derive a polynomial setpoint; and

control one or more actuators (14) coupled to the machinery (16) based on the polynomial setpoint.

15. The non-transitory, computer-readable medium (18) of claim 14, wherein the instructions are configured to select a surrogate parameter (78), wherein the emissions model (34) is configured to use the surrogate parameter (78) as a stand-in for the desired parameter (74), wherein the desired parameter (74) comprises a first measurement type, and wherein the surrogate parameter (78) comprises a second measurement type different than the first measurement type; wherein the surrogate parameter (78) comprises a compressor discharge pressure, a turbine speed, a fluid flow, an inlet guide vane position, or a combination thereof and wherein the instructions are configured to adjust the one or more models in real-time.

FIG. 1

FIG. 2

FIG. 3

```
                                ┌─102
            ┌──────────────────────────┐
            │      DETERMINE IF          │
            │   DATA IS SUITABLE         │
            └──────────────────────────┘
                         │
                         ▼          ┌─104
            ┌──────────────────────────┐
            │    TOSS UNSUITABLE         │
            │        DATA                │
            └──────────────────────────┘
                         │
                         ▼          ┌─106
            ┌──────────────────────────┐
            │  PERFORM  REGRESSION       │
            │       ANALYSIS             │
            └──────────────────────────┘
                         │
                         ▼          ┌─108
            ┌──────────────────────────┐
            │   RETRIEVE  BASELINES      │
            └──────────────────────────┘
                         │
                         ▼          ┌─40
            ╱──────────────────────────╱
            ╱        BASELINES         ╱
            ╱──────────────────────────╱
                         │
                         ▼          ┌─110
            ┌──────────────────────────┐
            │   COMPARE  TUNED           │
            │   MODELS  OR  MODEL        │
            │ TUNING  TO  BASELINES      │
            └──────────────────────────┘
                         │
                         ▼          ┌─112                    ┌─116
            ┌──────────────────────────┐        ┌──────────────────────────┐
            │     DETERMINE              │        │                          │
            │    OPERATIONAL             │───────▶│   UPDATE  BASELINE(S)    │
            │  STATE(S) BASED  ON        │        │                          │
            │   COMPARISONS              │        └──────────────────────────┘
            └──────────────────────────┘
                         │
                         ▼          ┌─114
            ┌──────────────────────────┐
            │     TRANSMIT               │
            │ OPERATIONAL  STATE(S)      │
            │  TO  CONTROLLER            │
            └──────────────────────────┘
```

100

FIG. 4

EP 3 270 241 A1

74 — NEW DESIRED PARAMETER

40 — BASELINES

78 — SURROGATE PARAMETER

74 — PREVIOUS DESIRED PARAMETER

118 — ON SIGNAL

QR MACRO

$y\_desired = (az^2 + bz + c)(x)$

FROM SUM OF:

$N, X, X^2, X^3, X^3, Y, XY, X^3Y$

36

120 — UPDATED MODEL

122 — SUMMATIONS VALUES

$\leq$

124 — OPERATIONAL STATE

FIG. 5

FIG. 6

FIG. 7

Europäisches
Patentamt

European
Patent Office

Office européen
des brevets

# EUROPEAN SEARCH REPORT

Application Number

EP 17 18 0812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/184549 A1 (PAMUJULA SURESH [US] ET AL) 2 July 2015 (2015-07-02)<br>* abstract *<br>* paragraphs [0002], [0006], [0009] *<br>* paragraphs [0043], [0045], [0046] *<br>* paragraphs [0054], [0071], [0072] *<br>* paragraphs [0105], [0106], [0117] *<br>* paragraph [0176] *<br>* figures 2,3,5,13,14 * | 1-15 | INV.<br>G05B13/04<br>G05B17/02<br>F02C9/00<br>F01K13/02 |
| X | US 2007/055392 A1 (D AMATO FERNANDO J [US] ET AL) 8 March 2007 (2007-03-08)<br>* abstract *<br>* paragraphs [0001], [0009], [0013] *<br>* paragraphs [0020], [0028], [0031] *<br>* paragraph [0050] * | 1-15 | |

TECHNICAL FIELDS
SEARCHED      (IPC)

G05B
F02C
F01K

The present search report has been drawn up for all claims

| Place of search | Date of completion of the search | Examiner |
|---|---|---|
| The Hague | 6 December 2017 | Dörre, Thorsten |

EPO FORM 1503 03.82 (P04C01)

## ANNEX TO THE EUROPEAN SEARCH REPORT
## ON EUROPEAN PATENT APPLICATION NO.

EP 17 18 0812

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2017

| Patent document cited in search report | | Publication date | Patent family member(s) | | Publication date |
|---|---|---|---|---|---|
| US 2015184549 | A1 | 02-07-2015 | JP 2015149885 A<br>US 2015184549 A1<br>US 2015185716 A1 | | 20-08-2015<br>02-07-2015<br>02-07-2015 |
| US 2007055392 | A1 | 08-03-2007 | NONE | | |

For more details about this annex : see Official Journal of the European Patent Office, No. 12/82

EPO FORM P0459